Europäisches Patentamt

European Patent Office

Office européen des brevets

(19)

(11) **EP 1 146 658 A1**

(12) **EUROPEAN PATENT APPLICATION**
published in accordance with Art. 158(3) EPC

(43) Date of publication:
**17.10.2001 Bulletin 2001/42**

(51) Int Cl.⁷: **H04B 1/707**

(21) Application number: **00977984.4**

(22) Date of filing: **28.11.2000**

(86) International application number:
**PCT/JP00/08375**

(87) International publication number:
**WO 01/41323 (07.06.2001 Gazette 2001/23)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.11.1999 JP 34012199**

(71) Applicant: **MATSUSHITA ELECTRIC INDUSTRIAL CO., LTD.**
**Kadoma-shi, Osaka 571-8501 (JP)**

(72) Inventors:
• **FUJII, Hideo**
  **Yokosuka-shi, Kanagawa 239-0847 (JP)**
• **HAYASHI, Masaki**
  **Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

(54) **CDMA RADIO RECEIVER AND CDMA RADIO RECEIVING METHOD**

(57)    A first correlation value calculation section 105-1 calculates a first correlation value between a first replica signal sequentially rotated by a predetermined rotation amount in a positive direction and a known signal part in a received signal, a second correlation value calculation section 105-2 calculates a second correlation between a second replica signal that is not rotated and a known signal part in a received signal, a third correlation value calculation section 105-3 calculates a third correlation between a third replica signal sequentially rotated by a predetermined rotation amount in a negative direction and a known signal part in a received signal, a comparison section 107 detects the phase rotation direction by selecting the largest correlation value of the first correlation value to third correlation value, a control section 108 varies a control voltage according to the phase rotation direction, and a VCO 109 generates a carrier of a frequency that is in accordance with the control voltage.

FIG.2

**Description**

Technical Field

The present invention relates to a CDMA radio receiving apparatus and a CDMA radio receiving method.

Background Art

Recently, the demand for terrestrial mobile communications such as mobile phones has been growing remarkably, and technologies for efficient frequency use in order to secure a larger number of subscribers in a limited frequency band have become important.

The CDMA method is attracting attention as one multiple access method for using frequencies efficiently. CDMA is a multiple access method using spread spectrum communication technology that offers expectations of diversity effectiveness through being resistant to the influence of multipath distortion and by maximal-ratio combining of multipath components.

A CDMA radio receiving apparatus used in this CDMA method finds the phase rotation speed per symbol from a phase rotation amount on the orthogonal coordinate plane of a known signal within a received signal, and performs Auto Frequency Control (AFC) according to that phase rotation speed. By performing this AFC, a CDMA radio receiving apparatus compensates for variation of the received signal carrier frequency that occurs due to precision error of the frequency oscillator between itself and the transmitting side.

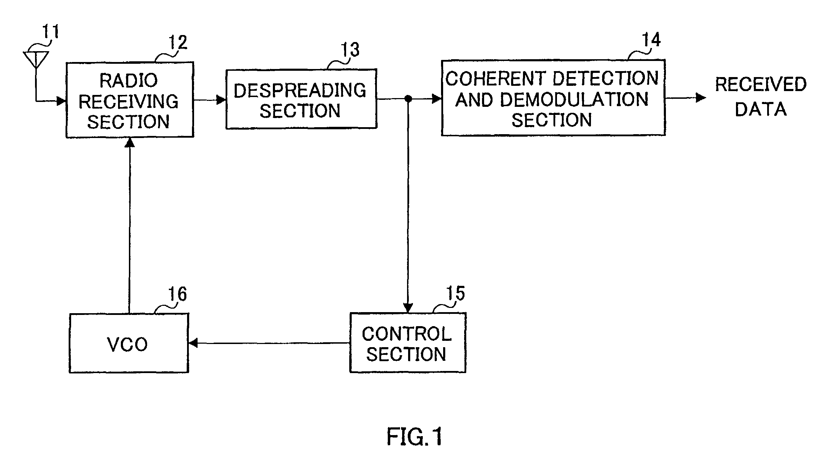

A conventional CDMA radio receiving apparatus will now be described using FIG. 1. FIG. 1 is a principal block diagram showing the outline configuration of a conventional CDMA radio receiving apparatus. In the following description, the transmitting side is described as a base station and the receiving side as a mobile station.

In FIG. 1, a radio receiving section 12 amplifies a radio signal including a known signal received via an antenna 11, multiplies together that amplified received signal and a carrier, and extracts a baseband signal from the received signal. In the following description, the processing for extracting a baseband signal from a received signal is called "quasi-coherent detection processing."

A despreading section 13 performs despreading processing by multiplying together the baseband signal and a spreading code. A coherent detection and demodulation section 14 performs predetermined detection processing on the signal subjected to despreading processing, and obtains receive data.

A control section 15 calculates the phase angle--that is, the phase rotation amount--on the orthogonal coordinate plane of the known signal subjected to despreading processing, and from that phase rotation amount detects the phase change amount per symbol--that is, the phase rotation speed of the known signal. The control section 15 then controls a Voltage Controlled Oscillator (VCO) 16 according to the phase rotation speed.

The VCO 16 is an oscillator that generates a carrier used in quasi-coherent detection processing in the radio receiving section 12, and varies the carrier frequency through control by the control section 15.

In this way, a conventional CDMA radio receiving apparatus detects the phase rotation speed using a received known signal, and performs AFC by varying the oscillation frequency of the VCO according to this phase rotation speed. By this means, a conventional CDMA radio receiving apparatus compensates for drift between the carrier frequency of a received signal, and the frequency of the carrier generated by the VCO.

A CDMA radio receiving apparatus cannot perform coherent detection and demodulation until phase rotation occurring in the baseband signal has converged.

However, there is a problem with a conventional CDMA radio receiving apparatus, as follows.

Namely, with a conventional CDMA radio receiving apparatus, in order to increase the reliability of the phase rotation speed value, the current phase rotation speed is calculated by finding the moving average of phase rotation speeds calculated in the past, for example. When this is done, the longer the interval used in calculating the moving average, the higher is the reliability of the moving average value, but the longer the interval, the longer is the time required before the frequency error between the transmitting frequency oscillator and the receiving frequency oscillator is canceled. As a result, a long time is required for phase rotation occurring in the baseband signal to converge, and during this time the CDMA radio receiving apparatus cannot perform coherent detection and demodulation of a received signal.

On the other hand, if a short interval is used, the reliability of the moving average value is low, and it is possible that phase rotation occurring in the baseband signal will not converge, or that even if it does converge it will be unstable and become diffuse again. As a result, the CDMA radio receiving apparatus cannot perform stable coherent detection and demodulation on a received signal.

Thus, while reliability increases as the length of the interval for calculating the moving average increases, the time during which the CDMA radio receiving apparatus cannot perform coherent detection and demodulation on a received signal increases; and on the other hand, if the interval used for calculating the moving average is shortened, reliability falls and the CDMA radio receiving apparatus cannot perform stable coherent detection and demodulation on a received signal. It is therefore necessary to set the shortest interval that enables reliability of the moving average to be ensured. However, there is a problem in that it is difficult to set a suitable interval (suitable parameter) for different CDMA radio receiving apparatuses.

There is also a method whereby, when a mobile station is powered on, for example, phase rotation occurring in the baseband signal is converged to some extent by calculating a moving average using a short interval, after which phase rotation occurring in the baseband signal continues to be converged by calculating the moving average using a long interval, and improving the reliability of the moving average value. The problem in this case, however, is that it is difficult to set a suitable timing for switching from a short interval to a long interval for different CDMA radio receiving apparatuses, and so switching control is difficult.

Also, with the TDD (Time Division Duplex) method, the downlink from a base station to a mobile station and the uplink from a mobile station to a base station are multiplexed by time division, so that a long time is required before the mobile station receives the number of pilot symbol samples necessary to obtain a highly reliable phase rotation speed value by means of a moving average. As a result, there is a problem in that a long time is required for phase rotation occurring in the baseband signal to converge, and during this time a CDMA radio receiving apparatus cannot perform coherent detection and demodulation on received signals.

Disclosure of Invention

It is an objective of the present invention to provide a CDMA radio receiving apparatus and CDMA radio receiving method in which parameter setting is easy, and control for converging phase rotation occurring in a baseband signal is also simple.

The inventors of the present invention focused on the fact that, as long as a received signal continues to undergo sequential phase rotation of an amount virtually constant over time, a phase of a received signal goes on rotating by a constant amount with time,

the known signal part within a received signal will also continue to undergo sequential phase rotation per chip within one symbol, and found that the state of phase rotation can be ascertained from the correlation between the known signal part within a received signal and the known signal spread with a sequentially rotated spreading code, to arrive at the present invention.

In order to achieve the above-described objective, in the present invention the correlation is calculated between the known signal part in a received signal and the signal (called "replica signal" below) resulting from spreading the known signal with a spreading code (called "replica code" below) sequentially rotated in the same series as the spreading code that spread the known signal in the received signal and sequentially rotated by a predetermined phase rotation amount, and whether or not the size of the phase rotation is within the permissible range is judged from the size of that correlation value.

Brief Description of Drawings

FIG.1 is a principal block diagram showing the outline configuration of a conventional CDMA radio receiving apparatus;

FIG.2 is a principal block diagram showing the outline configuration of a CDMA radio receiving apparatus according to Embodiment 1 of the present invention;

FIG.3 is a drawing showing the phase rotation of a replica code used by a CDMA radio receiving apparatus according to Embodiment 1 of the present invention;

FIG.4 is a principal block diagram showing the outline configuration of a CDMA radio receiving apparatus according to Embodiment 2 of the present invention;

FIG.5 is a drawing showing variation of the phase rotation amount of a replica code used by a CDMA radio receiving apparatus according to Embodiment 2 of the present invention; and

FIG.6 is a principal block diagram showing the outline configuration of a CDMA radio receiving apparatus according to Embodiment 3 of the present invention.

Best Mode for Carrying out the Invention

Embodiments of the present invention will be described specifically below with reference to accompanying drawings.

(Embodiment 1)

A CDMA radio receiving apparatus according to Embodiment 1 of the present invention calculates a correlation value, giving only a predetermined phase rotation amount Ä per chip as a parameter for a replica code, and detects the state of phase rotation according to the size of that correlation value.

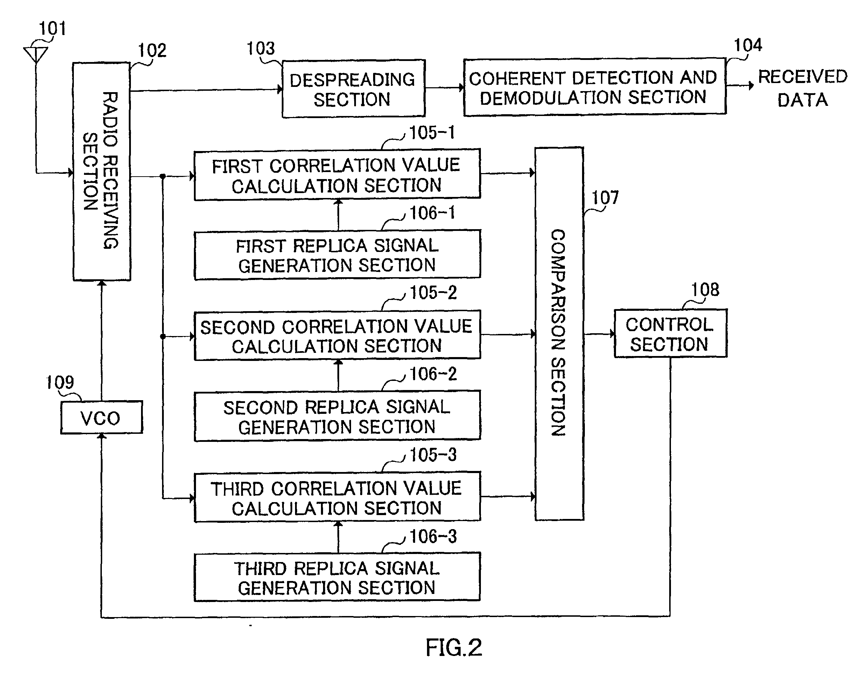

A CDMA radio receiving apparatus according to Embodiment 1 of the present invention will be described below using FIG.2. FIG.2 is a principal block diagram showing the outline configuration of a CDMA radio receiving apparatus according to Embodiment 1 of the present invention.

In FIG.2, a radio receiving section 102 amplifies a radio signal including a known signal received via an antenna 101, and a baseband signal is extracted from that amplified received signal by multiplying it by a carrier.

A despreading section 103 performs despreading processing by multiplying together the data part in the baseband signal and a spreading code. A coherent detection and demodulation section 104 performs predetermined demodulation processing on the signal that has undergone despreading processing, and receive data is obtained.

A first correlation value calculation section 105-1 to third correlation value calculation section 105-3 calculate correlation values between the known signal part in the baseband signal and replica signals generated by a first replica signal generation section 106-1 to third replica signal generation section 106-3, respectively.

A comparison section 107 detects the phase rotation state of a known reference signal by comparing the correlation values calculated by the first correlation value calculation section 105-1 to third correlation value calculation section 105-3, respectively, and selecting the largest correlation value. Here, "phase rotation state" means the direction of phase rotation and degree of phase rotation (whether or not the size of phase rotation is within the permissible range).

A control section 108 generates a control voltage to a VCO 109 according to the detected phase rotation state. The control section 108 reduces the control voltage by a predetermined amount to lower the frequency of the carrier generated by the VCO 109 if the direction of phase rotation is "positive" and the size of phase rotation is outside the permissible range, and increases the control voltage by a predetermined amount to raise the frequency of the carrier generated by the VCO 109 if the direction of phase rotation is "negative" and the size of phase rotation is outside the permissible range. This control is based on the fact that the direction of phase rotation is "positive" when the frequency of the carrier generated by the VCO 109 is high relative to the carrier frequency of the received signal, and "negative" when the frequency of the carrier generated by the VCO 109 is low relative to the carrier frequency of the received signal.

The control voltage control method is not limited to this. For example, an apparatus configuration can also be used whereby the control section 108 lowers the carrier frequency by increasing the control voltage by a predetermined amount, and raises the carrier frequency by reducing the control voltage by a predetermined amount.

The VCO 109 is an oscillator that generates a carrier used in quasi-coherent detection processing in the radio receiving section 102. The VCO 109 varies the frequency of the carrier in proportion to the control voltage generated by the control section 108, bringing the frequency of the carrier close to the carrier frequency of the received signal. By this means, phase rotation occurring in the baseband signal is gradually converged.

The carrier frequency control method is not limited to this . For example, an apparatus configuration can also be used whereby the VCO 109 varies the frequency of the carrier in inverse proportion to the control voltage generated by the control section 108.

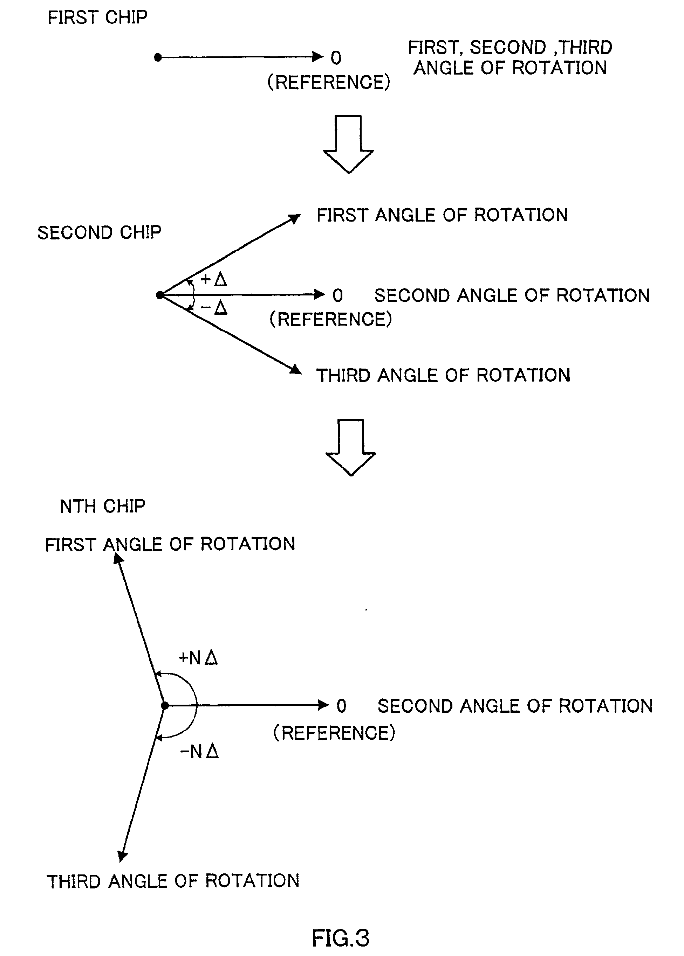

Next, the operation of a CDMA radio receiving apparatus having the above-described configuration will be described using FIG.3. FIG.3 is a drawing showing phase rotation of a replica code used by a CDMA radio receiving apparatus according to Embodiment 1 of the present invention.

Of the baseband signal extracted by the radio receiving section 102, the known signal part is output to first correlation value calculation section 105-1 to third correlation value calculation section 105-3.

As long as a received signal continues to undergo sequential phase rotation of an amount virtually constant over time, the known signal part within the received signal will also continue to undergo sequential phase rotation per chip within one symbol. Therefore, the first replica signal generation section 106-1 generates a first replica signal whereby a known signal is spread with a first replica code that rotates by a first angle of rotation +Ä at a time for each chip, as shown in FIG.3. Also, the third replica signal generation section 106-3 generates a third replica signal whereby a known signal is spread with a third replica code that rotates by a third angle of rotation -Ä at a time for each chip, as shown in FIG.3. And the second replica signal generation section 106-2 generates a second replica signal whereby a known signal is spread with a second replica code that does not rotate, as shown in FIG.3. The first angle of rotation +Ä and the third angle of rotation -Ä are predetermined angles of rotation, and their sizes are equal.

Next, the first correlation value calculation section 105-1 to third correlation value calculation section 105-3 calculate respectively the correlation values between the known signal part in the received signal and the replica signal. That is to say, the first correlation value calculation section 105-1 calculates the correlation between the first replica signal rotating by +Ä at a time for each chip and the known signal part in the received signal, the second correlation value calculation section 105-2 calculates the correlation between the second replica signal that does not rotate and the known signal part in the received signal, and the third correlation value calculation section 105-3 calculates the correlation between the third replica signal rotating by -Ä at a time for each chip and the known signal part in the received signal.

Normally, when phase rotation occurs, the known signal part in the received signal goes on rotating by a fixed rotation amount over time in one direction, "positive" or "negative." That is to say, the known signal part in the received signal goes on rotating by a fixed rotation amount for each chip in either the positive or negative direction. Therefore, if the known signal part in the received signal rotates greatly in the "positive" direction and the size of phase rotation is outside the permissible range, of the three correlation values calculated by correlation value calculation sections 105-1 to 105-3, the correlation value calculated by the first correlation value calculation section 105-1 will be the largest, and if the known signal part in the received signal rotates greatly in the "negative" direction and the size of phase rotation is outside the permissible range, of the three correlation values calculated by correlation value calculation sections 105-1 to 105-3, the correlation value calculated by the third correlation value calculation section 105-3 will be the largest. If the size of phase rotation of the known signal part in the received signal is within the permissible range, of the three correlation values calculated by correlation value calculation sections 105-1 to 105-3, the correlation value calculated by the second correlation value calculation section 105-2 will be the largest.

Here, a case where the size of phase rotation is within the permissible range means a case where the correlation value calculated by the second correlation value calculation section 105-2 is equal to or greater than the correlation value calculated by the first correlation value calculation section 105-1 and the correlation value calculated by the third correlation value calculation section 105-3, and a case where the size of phase rotation is outside the permissible range means a case where the correlation value calculated by the first correlation value calculation section 105-1 or the correlation value calculated by the third correlation value calculation section 105-3 is greater than the correlation value calculated by the second correlation value calculation section 105-2.

Thus, the comparison section 107 detects the phase rotation state of the known signal part in the received signal by comparing the three correlation values calculated by the correlation value calculation sections 105-1 to 105-3, and selecting the largest correlation value. To be specific, if the correlation value calculated by the third correlation value calculation section 105-3 is the largest of the three correlation values calculated by the correlation value calculation sections 105-1 to 105-3, the comparison section 107 detects that the size of phase rotation is outside the permissible range and the direction of rotation is "positive," and if the correlation value calculated by the third correlation value calculation section 105-3 is the largest of the three correlation values calculated by the correlation value calculation sections 105-1 to 105-3, the comparison section 107 detects that the size of phase rotation is outside the permissible range and the direction of rotation is "negative." And if the correlation value calculated by the second correlation value calculation section 105-2 is the largest of the three correlation values calculated by the correlation value calculation sections 105-1 to 105-3, the comparison section 107 detects that phase rotation of the known signal part in the received signal is within the permissible range. The comparison section 107 then outputs to the control section 108 a control signal indicating the phase rotation state of the known signal part in the received signal.

In accordance with this control signal, if the size of phase rotation is outside the permissible range and its direction of rotation is "positive," the control section 108 reduces the control voltage by a predetermined amount to lower the frequency of the carrier generated by the VCO 109, and if the size of phase rotation is outside the permissible range and its direction of rotation is "negative," the control section 108 increases the control voltage by a predetermined amount to raise the frequency of the carrier generated by the VCO 109. And if a control signal indicating that the size of the phase rotation is within the permissible range is output, the control section 108 holds the control voltage constant to maintain the frequency of the carrier generated by the VCO 109.

Next, the operation of the above-described CDMA radio receiving apparatus will be described in concrete terms using equations.

If the spreading code that spreads the known signal part in the received signal is designated

$$C = \begin{pmatrix} C_{ik} \\ C_{qk} \end{pmatrix} \quad \cdots \ (1)$$

the above-described three kinds of replica signal R can be expressed by equation (2) below.

$$R = \begin{pmatrix} R_{ik} \\ R_{qk} \end{pmatrix} = \begin{pmatrix} \cos\psi & \sin\psi \\ -\sin\psi & \cos\psi \end{pmatrix} \begin{pmatrix} C_{ik} \\ C_{qk} \end{pmatrix} \qquad \text{where} \quad \psi = \alpha + (k-1)\theta \qquad \cdots (2)$$

Here, i indicates the in-phase component, q the quadrature phase component, k the number of chips (k = 1 to K) , and á a constant (rotation amount when k = 1). It is then possible to express the above three kinds of replica code by making è +Ä with the first replica code, - Ä with the third replica code, and 0 with the second replica code.

Also, the known signal part S in a received signal can be expressed by equation (3) below.

$$S = \begin{pmatrix} S_{ik} \\ S_{qk} \end{pmatrix} = \begin{pmatrix} \cos\sigma & \sin\sigma \\ -\sin\sigma & \cos\sigma \end{pmatrix} \begin{pmatrix} C_{ik} \\ C_{qk} \end{pmatrix} \qquad \text{where} \quad \sigma = \beta + (k-1)\gamma \qquad \cdots (3)$$

Here, i indicates the in-phase component, q the quadrature phase component, k the number of chips (k = 1 to K), â a constant (rotation amount of the known reference signal when k = 1), and $\gamma$ the rotation amount per chip of the received signal.

The first correlation value calculation section 105-1 to third correlation value calculation section 105-3 respectively per form calculation of the correlation between the replica signal indicated by above equation (2) and the known signal part in the received signal indicated by above equation (3).

For example, if the radio frequency band is 2 [GHz], and the carrier frequency error is 1 [ppm], the known signal part in the received signal will rotate $2\delta$ [rad] in 0.5 [ms]. Therefore, if one slot is 0.625 [ms] and the number of chips is 2560 [chips], then if the number of chips of the despreading code despreading the known signal part in the received signal is 512 [chips], the known signal part in the received signal will rotate $(1/2)\delta$ [rad] in 512 [chips]--that is, 0.125 [ms].

Here, if $|\ddot{A}| = |\gamma|$ and the direction of rotation is "positive," and if a first replica code +Ä setting and third replica code -Ä setting are made, as the results of the correlation value calculations made with above equation (2) and above equation (3), the first correlation value calculation section 105-1 calculates "512" as the correlation value, the second correlation value calculation section 105-2 calculates "461" (rounding the decimal part to the nearest whole number) as the correlation value, and the third correlation value calculation section 105-3 calculates "325" (rounding the decimal part to the nearest whole number) as the correlation value.

These correlation values are the values calculated by performing simulation by substituting the respective values in above equations (2) and (3). To simplify the present simulation, it is assumed that á = â = 0.

The comparison section 107 compares the correlation values, and since the size relationship of the correlation values is "512 > 461 > 325," detects that the size of the phase rotation of the known signal part in the received signal is outside the permissible range, and that its direction is "positive." The comparison section 107 then outputs a control signal indicating the phase rotation state to the control section 108.

In this embodiment, the configuration is such that the comparison section 107 outputs a control signal indicating the phase rotation state of the known signal part in the received signal to the control section 108, and the control section 108 adjusts the carrier frequency generated by the VCO 109 by a predetermined amount according to this control signal. However, a configuration can also be used whereby the comparison section 107 outputs correlation values to the control section 108 together with a control signal indicating the phase rotation state of the known signal part in the received signal, and the control section 108 adaptively varies the amount of adjustment of the carrier frequency generated by the VCO 109 according to the size of each correlation value.

In the above description, the configuration is such that the first correlation value calculation section 105-1 to third correlation value calculation section 105-3 calculate the correlation between the known signal part in the received signal and the replica signals generated by the first replica signal generation section 106-1 to third replica signal generation section 106-3, respectively.

However, in CDMA communication, there is a method whereby slot timing detection, etc., is performed by transmitting, on the transmitting side, a signal that has a midamble part created by a known code, and, on the receiving side, performing calculation of the correlation between a received signal including the known code and the known code.

In CDMA communication using this kind of method, a configuration can be used whereby the first correlation value calculation section 105-1 to third correlation value calculation section 105-3 calculate the correlation between a known code of a midamble part in the received signal and replica codes generated by the first replica signal generation section 106-1 to third replica signal generation section 106-3, respectively. In this case, the replica codes are codes that are sequentially rotated in the same series as the known code of the midamble part and by a predetermined phase rotation amount.

Thus, according to a CDMA radio receiving apparatus according to this embodiment, correlation values are calculated, giving only a predetermined phase rotation amount Ä for each chip as a parameter corresponding to a replica code, and the phase rotation state is detected according to the size of those correlation values, so that parameter setting is easy and control for converging the phase rotation amount occurring in the baseband signal is also simple.

(Embodiment 2)

A CDMA radio receiving apparatus according to Embodiment 2 of the present invention differs from Embodiment 1 in that, when the size of phase rotation is within the permissible range, the phase rotation range is reduced by decreasing the replica code angle of phase rotation Ä for each chip.

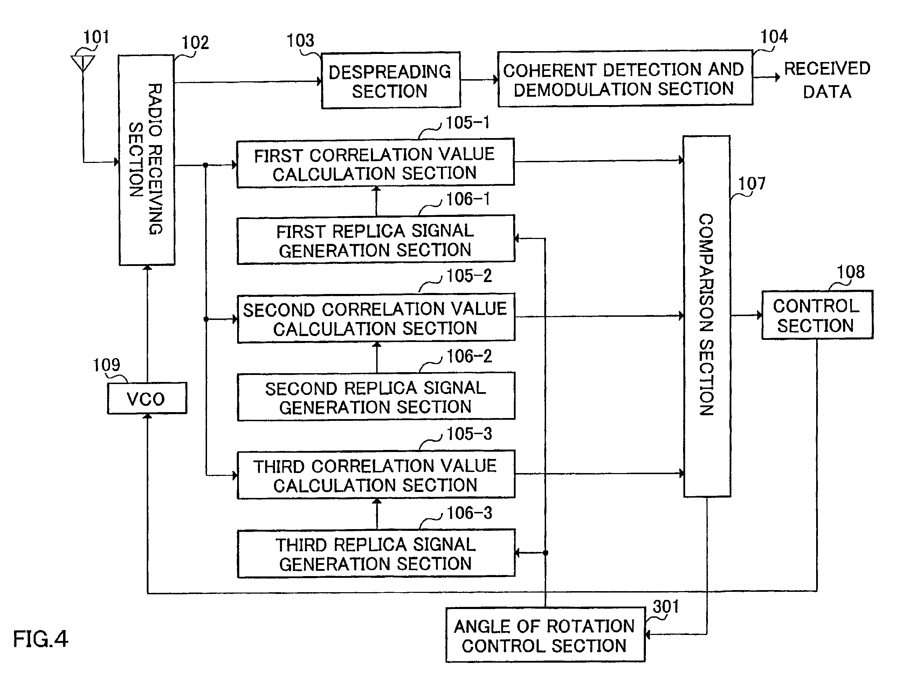

A CDMA radio receiving apparatus according to Embodiment 2 of the present invention will be described below using FIG.4. FIG.4 is a principal block diagram showing the outline configuration of a CDMA radio receiving apparatus according to Embodiment 2 of the present invention. The parts in FIG.4 identical to those in FIG.2 are assigned the same numbers as in FIG.2, and their detailed explanations are omitted.

In FIG.4, a comparison section 107 outputs a control signal indicating the phase rotation state of a known signal part in a received signal to a control section 108 and an angle of rotation control section 301.

When a control signal indicating that the size of phase rotation of the known signal part in the received signal is within the permissible range is output from the comparison section 107, the angle of rotation control section 301 performs control that decreases the variation amount of the first angle of rotation +Ä and third angle of rotation -Ä.

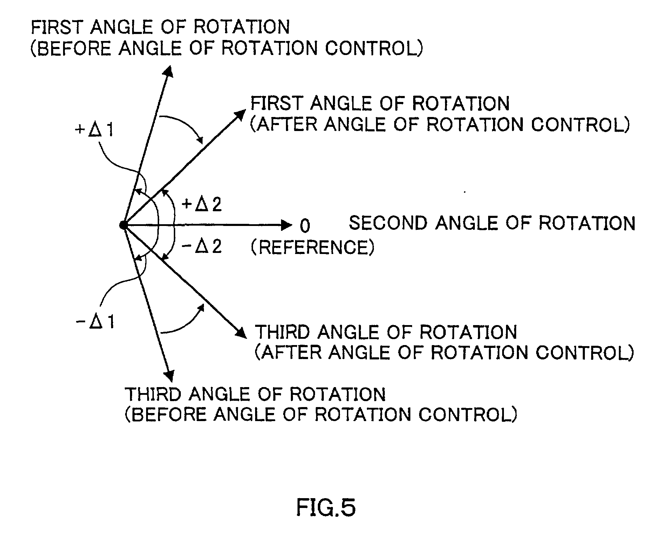

Next, the operation of a CDMA radio receiving apparatus having the above-described configuration will be described using FIG.5. FIG.5 is a drawing showing variation of the phase rotation amount of a replica code used by a CDMA radio receiving apparatus according to Embodiment 2 of the present invention.

If the size of phase rotation of the known signal part in the received signal is within the permissible range, of the three correlation values calculated by correlation value calculation sections 105-1 to 105-3, the correlation value calculated by the second correlation value calculation section 105-2 will be the largest. Thus, if a control signal indicating that the size of phase rotation of the known signal part in the received signal is within the permissible range is output from the comparison section 107, the angle of rotation control section 301 performs control of the first replica signal generation section 106-1 to decrease the variation amount of the first angle of rotation +Ä, and performs control of the third replica signal generation section 106-3 to decrease the variation amount of the third angle of rotation -Ä.

As shown in FIG.5, through this angle of rotation control? (control of rotation angle?), the first angle of rotation changes from +Ä1 to +Ä2, and the third angle of rotation changes from -Ä1 to -Ä2, the variation amount of each angle of rotation decreasing equally. Therefore, when the size of phase rotation of the known signal part in the received signal is within the permissible range, the phase rotation range is gradually reduced, so that it becomes possible to converge baseband signal phase rotation quickly and with high precision.

In accordance with this control, the first replica signal generation section 106-1 generates a first replica signal for which the amount of variation of the angle of rotation has been reduced, and the third replica signal generation section 106-3 generates a third replica signal for which the amount of variation of the angle of rotation has been reduced. The first correlation value calculation section 105-1 and third correlation value calculation section 105-3 then calculate the correlation between the replica signals for which the amount of variation of the angle of rotation has been reduced and the known signal part in the received signal.

Thus, according to a CDMA radio receiving apparatus according to this embodiment, when the size of phase rotation is within the permissible range, the phase rotation range is reduced by decreasing the replica code angle of phase rotation Ä for each chip, so that when the size of phase rotation is within the permissible range, it is possible to converge baseband signal phase rotation quickly and with high precision without the necessity of switching control, etc ., for which setting of the timing for switching the moving average calculation interval has heretofore been difficult.

(Embodiment 3)

A CDMA radio receiving apparatus according to Embodiment 3 of the present invention differs from Embodiment 1 in that finger assignment is performed according to a delay profile created by means of a replica code to which phase rotation is added.

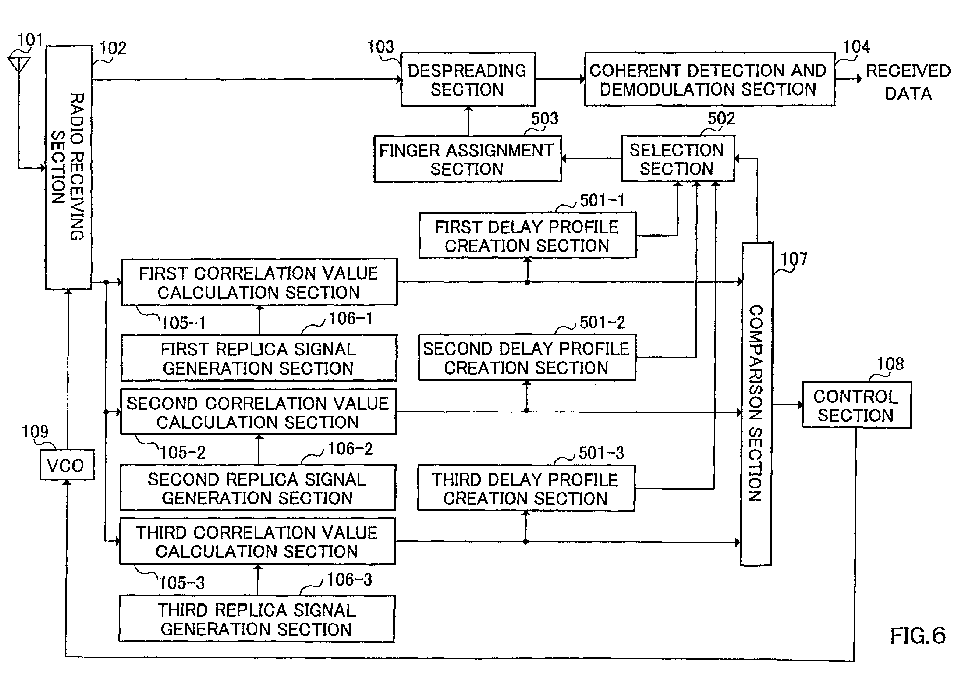

A CDMA radio receiving apparatus according to Embodiment 3 of the present invention will be described below using FIG.6. FIG.6 is a principal block diagram showing the outline configuration of a CDMA radio receiving apparatus according to Embodiment 3 of the present invention. The parts in FIG. 6 identical to those in FIG.2 are assigned the same numbers as in FIG.2, and their detailed explanations are omitted.

A first delay profile creation section 501-1 to third delay profile creation section 501-3 create delay profiles from the correlation values calculated by the first correlation value calculation section 105-1 to third correlation value calculation section 105-3, respectively. Therefore, each delay profile is a delay profile of a state for which phase rotation has been added. After outputting correlation values used in AFC control, the first correlation value calculation section 105-1 to third correlation value calculation section 105-3 continue to perform correlation value calculation in order to create delay profiles chip by chip.

A selection section 502 selects the delay profile created from the largest correlation value, according to a control signal output from the comparison section 107. A finger assignment section 503 performs finger assignment to the despreading section 103 in accordance with the delay profile selected by the selection section 502.

Next, the operation of a CDMA radio receiving apparatus having the above-described configuration will be described.

The comparison section 107 outputs a control signal indicating the phase rotation state of a known reference signal to the control section 108 and selection section 502. Also, a first delay profile to third delay profile created by the first delay profile creation section 501-1 to third delay profile creation section 501-3 are output to the selection section 502.

In accordance with a control signal output from the comparison section 107, the selection section 502 selects the delay profile created from the largest correlation value of the three correlation values calculated by the correlation value calculation sections 105-1 to 105-3, and outputs it to the finger assignment section 503.

To be specific, if the comparison section 107 outputs a control signal indicating that the size of phase rotation of the known signal part in the received signal is outside the permissible range and its direction is "positive," the selection section 502 selects the first delay profile. Similarly, if the comparison section 107 outputs a control signal indicating that the size of phase rotation of the known signal part in the received signal is outside the permissible range and its direction is "negative," the selection section 502 selects the third delay profile; and if the comparison section 107 outputs a control signal indicating that the size of phase rotation of the known signal part in the received signal is within the permissible range, the selection section 502 selects the second delay profile. By this means, a delay profile created by means of a spreading code with phase rotation added or a known code with phase rotation added is selected according to the phase rotation state.

Next, the finger assignment section 503 outputs to the despreading section 103 a signal indicating the position of each finger on the delay profile selected by the selection section 502. The despreading section 103 then performs despreading processing on the received signal in accordance with the timing at which each finger is raised.

Thus, according to a CDMA radio receiving apparatus according to this embodiment, since finger assignment is performed according to a delay profile created from a replica code with phase rotation added, precise finger assignment is possible even if phase rotation occurs in the baseband signal. It is therefore possible to estimate accurately the reception timing of a delayed wave.

A CDMA radio receiving apparatus according to above-described Embodiments 1 to 3 can be applied to a communication terminal apparatus or base station apparatus in a radio communication system.

Also, above-described Embodiments 1 to 3 can be implemented in combination as appropriate.

According to the present invention, as described above, parameter settings can be made easily, and control for converging phase rotation occurring in a baseband signal can also be performed simply.

This application is based on the Japanese Patent Application No.HEI 11-340121 filed on November 30, 1999, entire content of which is expressly incorporated by reference herein.

**Claims**

**1.** A CDMA radio receiving apparatus comprising:

a generator for generating a replica signal by spreading a known signal with a spreading code while sequentially rotating a phase of the spreading code by a predetermined phase rotation amount, the spreading code being the same series as a spreading code with which a known signal part in a received signal is spread
a calculator for calculating a correlation value between said known signal part and said replica signal;
a detector for detecting the phase rotation state from calculated correlation values; and
a carrier generator for generating a carrier by varying the frequency when the size of detected phase rotation is outside a permissible range.

**2.** A CDMA radio receiving apparatus comprising:

a generator for generating a replica code, in the same series as a known code included in a received signal and sequentially rotated by a predetermined phase rotation amount;
a calculator for calculating a correlation value between said known code and said replica code;
a detector for detecting the phase rotation state from calculated correlation values; and
a carrier generator for generating a carrier by varying the frequency when the size of detected phase rotation is outside a permissible range.

3. The CDMA radio receiving apparatus according to claim 1, wherein said generator decreases a predetermined phase rotation amount by a predetermined amount when the size of detected phase rotation is within a permissible range.

4. The CDMA radio receiving apparatus according to claim 1, further comprising:

a creator for creating a delay profile to which phase rotation is added from a calculated correlation value; and
a despreader for performing despreading on a received signal according to said delay profile.

5. A CDMA radio receiving apparatus comprising:

a first calculator for calculating a first correlation value between a first replica signal that spreads a known signal, in the same series as a spreading code that spreads a known signal part in a received signal and with a spreading code sequentially rotated by a predetermined phase rotation amount, and said known signal;
a second calculator for calculating a second correlation value between a second replica signal that spreads a known signal with a spreading code that spreads said known signal part, and said known signal part;
a comparator-detector for detecting phase rotation state by comparing said first correlation value and said second correlation value; and
a carrier generator for generating a carrier by varying the frequency when the size of detected phase rotation is outside a permissible range.

6. A CDMA radio receiving apparatus comprising:

a first calculator for calculating a first correlation value between a replica code in the same series as a known code included in a received signal and sequentially rotated by a predetermined phase rotation amount, and said known code included in said received signal;
a second calculator for calculating a second correlation value between a known code and said known code included in said received signal;
a comparator-detector for detecting phase rotation state by comparing said first correlation value and said second correlation value; and
a carrier generator for generating a carrier by varying the frequency when the size of detected phase rotation is outside a permissible range.

7. A communication terminal apparatus incorporating a CDMA radio receiving apparatus, said CDMA radio receiving apparatus comprising:

a generator for generating a replica signal that spreads a known signal, in the same series as a spreading code that spreads a known signal part in a received signal and with a spreading code sequentially rotated by a predetermined phase rotation amount;
a calculator for calculating a correlation value between said known signal part and said replica signal;
a detector for detecting the phase rotation state from calculated correlation values; and
a carrier generator for generating a carrier by varying the frequency when the size of detected phase rotation is outside a permissible range.

8. A communication terminal apparatus incorporating a CDMA radio receiving apparatus, said CDMA radio receiving apparatus comprising:

a generator for generating a replica code, in the same series as a known code included in a received signal and sequentially rotated by a predetermined phase rotation amount;
a calculator for calculating a correlation value between said known code and said replica code;
a detector for detecting the phase rotation state from calculated correlation values; and
a carrier generator for generating a carrier by varying the frequency when the size of detected phase rotation is outside a permissible range.

9. A base station apparatus incorporating a CDMA radio receiving apparatus, said CDMA radio receiving apparatus comprising:

a generator for generating a replica signal that spreads a known signal, in the same series as a spreading code that spreads a known signal part in a received signal and with a spreading code sequentially rotated by a predetermined phase rotation amount;
a calculator for calculating a correlation value between said known signal part and said replica signal;
a detector for detecting the phase rotation state from calculated correlation values; and
a carrier generator for generating a carrier by varying the frequency when the size of detected phase rotation is outside a permissible range.

10. A base station apparatus incorporating a CDMA radio receiving apparatus, said CDMA radio receiving apparatus comprising:

a generator for generating a replica code, in the same series as a known code included in a received signal and sequentially rotated by a predetermined phase rotation amount;
a calculator for calculating a correlation value between said known code and said replica code;
a detector for detecting the phase rotation state from calculated correlation values; and
a carrier generator for generating a carrier by varying the frequency when the size of detected phase rotation is outside a permissible range.

11. A CDMA radio receiving method for detecting the phase rotation state by calculating a correlation value between a replica signal that spreads a known signal, in the same series as a spreading code that spreads a known signal part in a received signal and with a spreading code sequentially rotated by a predetermined phase rotation amount, and said known signal part; and varying the frequency of a carrier when the size of detected phase rotation is outside a permissible range.

12. A CDMA radio receiving method for detecting the phase rotation state by calculating a correlation value between a replica code in the same series as a known code included in a received signal and sequentially rotated by a predetermined phase rotation amount, and said known code; and varying the frequency of a carrier when the size of detected phase rotation is outside a permissible range.

FIG.1

EP 1 146 658 A1

FIG.2

EP 1 146 658 A1

FIRST CHIP

● ────────────→ 0
(REFERENCE)

FIRST, SECOND ,THIRD
ANGLE OF ROTATION

⇩

SECOND CHIP

FIRST ANGLE OF ROTATION

$+\Delta$
$-\Delta$
────────────→ 0     SECOND ANGLE OF ROTATION
(REFERENCE)

THIRD ANGLE OF ROTATION

⇩

NTH CHIP

FIRST ANGLE OF ROTATION

$+N\Delta$

────────────→ 0     SECOND ANGLE OF ROTATION
(REFERENCE)

$-N\Delta$

THIRD ANGLE OF ROTATION

FIG.3

FIG.4

EP 1 146 658 A1

FIRST ANGLE OF ROTATION
(BEFORE ANGLE OF ROTATION CONTROL)

FIRST ANGLE OF ROTATION
(AFTER ANGLE OF ROTATION CONTROL)

$+\Delta 1$

$+\Delta 2$

0    SECOND ANGLE OF ROTATION

$-\Delta 2$  (REFERENCE)

$-\Delta 1$

THIRD ANGLE OF ROTATION
(AFTER ANGLE OF ROTATION CONTROL)

THIRD ANGLE OF ROTATION
(BEFORE ANGLE OF ROTATION CONTROL)

FIG.5

FIG.6

EP 1 146 658 A1

## INTERNATIONAL SEARCH REPORT

| International application No. |
| --- |
| PCT/JP00/08375 |

**A. CLASSIFICATION OF SUBJECT MATTER**
   Int.Cl$^7$   H04B1/707

According to International Patent Classification (IPC) or to both national classification and IPC

**B. FIELDS SEARCHED**

Minimum documentation searched (classification system followed by classification symbols)
   Int.Cl$^7$   H04B1/69-1/713, H04J13/00-13/06

Documentation searched other than minimum documentation to the extent that such documents are included in the fields searched
   Jitsuyo Shinan Koho          1926-1996     Toroku Jitsuyo Shinan Koho   1994-2001
   Kokai Jitsuyo Shinan Koho   1971-2001     Jitsuyo Shinan Toroku Koho   1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP, 11-112591, A (Kokusai Electric Co., Ltd.),<br>23 April, 1999 (23.04.99),<br>Full text; Figs. 1 to 3   (Family: none) | 2,6,8,10,12<br>1,3-5,7,9,11 |
| P,X<br>P,A | JP, 2000-278254, A (Hitachi Denshi, Ltd.),<br>06 October, 2000 (06.10.00),<br>Full text; Figs. 1 to 7   (Family: none) | 2,6,8,10,12<br>1,3-5,7,9,11 |
| A | JP, 11-266230, A (Matsushita Electric Ind. Co., Ltd.),<br>28 September, 1999 (28.09.99),<br>Full text; Figs. 1 to 6   (Family: none) | 1-12 |
| A | JP, 10-126310, A (Matsushita Electric Ind. Co., Ltd.),<br>15 May, 1998 (15.05.98),<br>Full text; Figs. 1 to 3   (Family: none) | 1-12 |
| A | JP, 9-298492, A (Matsushita Electric Ind. Co., Ltd.),<br>18 November, 1997 (18.11.97),<br>Full text; Figs. 1 to 2   (Family: none) | 1-12 |

| ☐ Further documents are listed in the continuation of Box C. | ☐ See patent family annex. |
| --- | --- |

\*   Special categories of cited documents:
"A"   document defining the general state of the art which is not considered to be of particular relevance
"E"   earlier document but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>   06 February, 2001 (06.02.01) | Date of mailing of the international search report<br>   13 February, 2001 (13.02.01) |
| --- | --- |
| Name and mailing address of the ISA/<br>   Japanese Patent Office | Authorized officer |
| Facsimile No. | Telephone No. |

Form PCT/ISA/210 (second sheet) (July 1992)